# EUROPÄISCHE PATENTSCHRIFT

(11) **EP 1 484 236 B1**
(45) Veröffentlichungstag und Bekanntmachung des Hinweises auf die Patenterteilung: **25.07.2007**
(21) Anmeldenummer: 04011132.0
(22) Anmeldetag: 11.05.2004
(51) Int. Cl.: B62D 27/06, B62D 25/20

(54) **Stosskantenverbindung in einem Nutzfahrzeug, insbesondere Omnibus**
Butt joint in a commercial motor vehicle, in particular a bus
Raccordement bout-à-bout dans un véhicule utilitaire, en particulier un bus

(30) Priorität: 07.06.2003 DE 20308929 U
(43) Veröffentlichungstag der Anmeldung: 08.12.2004
(73) Patentinhaber: MAN Nutzfahrzeuge Aktiengesellschaft, 80976 München (DE)
(72) Erfinder: Paul, Oliver, 38312 Cramme (DE)

(56) Entgegenhaltungen:
- US-A- 4 122 966
- US-A- 4 357 048

## Beschreibung

Die Erfindung betrifft eine mechanische Verbindung zwischen einem am Fahrzeugaufbau festgelegten Metallteil oder Kunststoffteil und beispielsweise einem Fußboden in einem Nutzfahrzeug insbesondere einem Omnibus

Der Fußboden in einem Nutzfahrzeug, wie beispielsweise in einem Omnibus oder in einem Linienbus, ist großen Belastungen ausgesetzt.

Zum einen muss das Fahrzeug Verwindungen aufnehmen können, weil der Fahrzeugaufbau nie so steif gebaut-werden kann, dass die Unebenheiten von Fahrbahnen nur über die Federung an den Rädern aufgenommen wird. Vielmehr ist es gewollt, dass der Fahrzeugaufbau nicht ganz steif ist, weil dadurch Gewicht am Fahrzeugaufbau gespart werden kann.

Die Bewegungen am Fußboden infolge Verwindung und Biegung muss der Fußboden aufnehmen können.

Zum anderen ist der Fußboden in einem Bus im Normalfall aus Sperrholz, das zwar gegen Schmutz- und Schwallwasser, das im Bereich außerhalb des Fahrgastraumes anfällt, imprägniert ist, das dennoch feuchtigkeitsabhängig relativ große Bewegungen durchführt.

Aus den genannten Gründen muss deshalb zwischen einem aufbauseitigen Metallteil, beispielsweise einem Aluminium-Ein-Ausstieg und dem Fußboden, ein relativ großer elastischer Zwischenraum sein.

Dieser genannte Zwischenraum wurde bisher mit einem Polyurethankleber (PU-Kleber) ausgefugt. Die Arbeit ist aufwändig wegen der beim Kleben erforderlichen Sauberkeit und serienuntauglich, weil überschüssiger PU-Kleber manuell und mit chemischem Reiniger entfernt werden muss.

Eine Stosskantenverbindung in einem Nutzfahrzeug gemäss dem Oberbegriff vom Anspruchs 1 ist in der US-A-4122966 offenbart.

Aufgabe der Erfindung ist es, eine Zuverlässige Verbindung zwischen einem am Fahrzeugaufbau befestigtem Teil und dem Fußboden zu schaffen. Die Erfindung wird durch den Schutzanspruch 1 gelöst.

Dadurch, dass in dem am Fahrzeugaufbau festgelegten Metallteil oder Kunststoffteil eine Nut vorgesehen ist, in die ein Keder einbringbar ist und der Keder mit dem Fußbodenbelag durch Schweißung verbunden ist, ist eine sichere Verbindung zwischen dem genannten Metallteil und dem Fußboden des Fahrzeugs geschaffen.

Die Nut in dem am Fahrzeugaufbau festgelegten Metallteil oder Kunststoffteil muss so gestaltet sein, dass durch den Keder die Stelle Metallteil oder Kunststoffteil/Keder wasserdicht ist. Vorzugsweise ist der Keder im eingebauten Zustand gequetscht.

Der Keder kann z. B. mittels einer Leiste und durch Hammerschlag in die Nut hineingedrückt werden. Der PVC-Belag des Holzfußbodens muss bis zum Keder reichen. Die Schweißung zwischen Keder und PVC-Belag kann mit einer Schweißschnur und einer entsprechenden Wärmequelle erfolgen.

Durch die erfindungsgemäße Ausgestaltung ist eine sichere und robuste Verbindung zwischen beispielsweise einem Ein-Ausstieg und dem Fußboden eines Omnibusses geschaffen und es ist ein serientauglicher Arbeitsablauf sichergestellt.

### Die Fig. zeigt ein Ausführungsbeispiel der Erfindung

Die Bodenbelagverschweißung 10 ist zwischen einem Fußboden 11 und dem oberen Ende eines Ein-Ausstiegs 12 eines Omnibusses dargestellt.

In das obere Ende des Ein-Ausstiegs 12 ist eine Nut 17 vorgesehen, in die der Keder 14 eingebracht ist. Der Keder 14 sitzt dichtend in der Nut, z. B. durch ein entsprechendes Übermaß des Keders, damit diese Stelle wasserdicht ist.

Die untere Seite des Ein-Ausstieges 12 ragt über die Nut 17 hinaus und ist Auflage für den Bodenbelag 13. Oberhalb dieser genannten Stelle ist der Keder 14 mit dem Bodenbelag 13 durch eine Kunststoffschweißung 15 verbunden.

Zwischen der unteren Seite des Ein-Ausstieges 12 und dem Fußboden 11 ist eine elastische Ausfugung 16 vorgesehen, damit von der Außenseite des Fahrzeugs her kein Schmutz in die Verbindungsstelle gelangen kann.

Die dargestellte Erfindung ist eine sehr elastische und robuste Verbindung zwischen einem am Fahrzeugaufbau festgelegten Metallteil 12 oder Kunststoffteil 12 und dem Fußboden 11 eines Omnibusses.

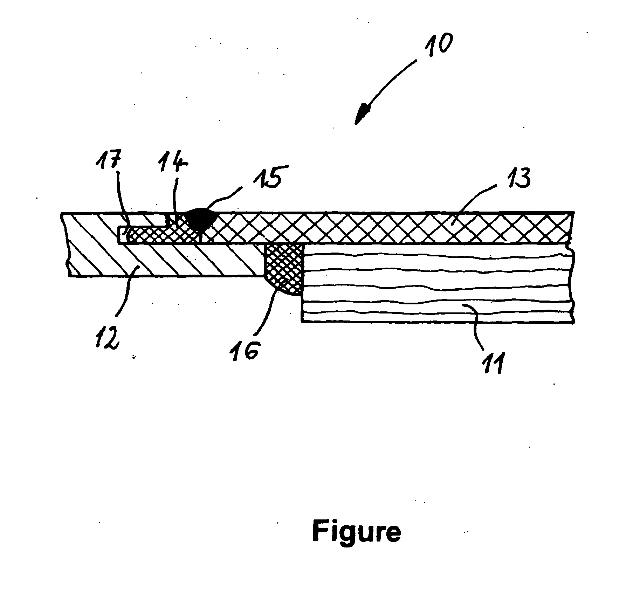

## Patentansprüche

1. Stosskantenverbindung in einem Nutzfahrzeug, insbesondere Omnibus, zwischen einem am Fahrzeugaufbau festgelegten Metallteil oder Kunststoffteil und dem Fußboden, wobei der Fußboden aus Sperrholz ist und einen Bodenbelag wie beispielsweise PVC aufweist, wobei in dem am Fahrzeugaufbau festgelegten Metallteil (12) oder Kunststoffteil eine Nut (17) vorgesehen ist, **dadurch gekennzeichnet, dass** in die Nut ein Keder (14) eingebracht ist, der mit dem Bodenbelag (13), beispielsweise PVC (13), des Fußbodens (11) durch eine Schweißung (15) verbunden ist.

2. Stosskantenverbindung nach Anspr. 1, **dadurch gekennzeichnet, dass** das am Fahrzeug festgelegte Metallteil (12) ein Ein-Ausstieg aus Aluminium ist.

3. Stosskantenverbindung nach Anspr. 1, **dadurch gekennzeichnet, dass** das am Fahrzeug festgelegte Metallteil (12) eine Leiste ist.

4. Stosskantenverbindung nach Anspruch 1, **dadurch gekennzeichnet dass** das am Rahmen festgelegte Kunststoffteil ein Glasfaserverstärker Kunststoff ist.

## Claims

1. Joint-type connection in a commercial vehicle, in particular a bus/coach, between a metal part or synthetic part attached to the vehicle superstructure and the floor made from plywood and provided with floorcovering, eg with PVC covering, whereby a groove (17) is provided in the metal part (12) or synthetic part attached to the vehicle superstructure, **characterised in that** a cord (14) is inserted in the groove and connected with the floorcovering (13), eg with PVC covering, of the floor (11) by means of a weld (15)

2. Joint-type connection according to Claim 1, **characterised in that** the metal part (12) attached to the vehicle is an entry-exit unit made of aluminium.

3. Joint-type connection according to Claim 1, **characterised in that** the metal part (12) attached to the vehicle is a strip.

4. Joint-type connection according to Claim 1, **characterised in that** the synthetic part attached to the frame is a glass-fibre-reinforced synthetic part.

## Revendications

1. Liaison de rebords dans un véhicule industriel, en particulier dans un bus, entre la pièce métallique ou la pièce en matériau composite fixée sur la carrosserie du véhicule et le plancher, auquel cas le plancher est formé d'un bois contreplaqué et présente un revêtement de plancher tel que du PVC et auquel cas une rainure (17) est prévue dans la pièce métallique (12) ou la pièce en matériau composite fixée sur la carrosserie du véhicule et reçoit un bourrelet (14) qui est relié au revêtement de plancher (13), par exemple en PVC (13), du plancher par le biais d'une soudure (15)

2. Liaison de rebords selon la revendication 1, **caractérisée en ce que** la pièce métallique (12) fixée sur le véhicule est un élément d'emmarchement en aluminium.

3. Liaison de rebords selon la revendication 1, **caractérisée en ce que** la pièce métallique (12) fixée sur le véhicule est une baguette.

4. Liaison de rebords selon la revendication 1, **caractérisée en ce que** la pièce en matériau composite fixée sur le véhicule est une pièce en matière plastique renforcée par des fibres de verre.
